# EUROPEAN PATENT APPLICATION

(11) **EP 3 836 046 A1**
(43) Date of publication of application: **16.06.2021**
(21) Application number: 20213222.1
(22) Date of filing: 10.12.2020
(51) Int. Cl.: G06Q 10/02, G06Q 30/02

(54) **CONFIGURABLE USER-INPUT PORTAL FOR TOUR OPERATORS**

(30) Priority: 10.12.2019 US 201916709361
(71) Applicant: Peek Travel Inc., San Francisco, CA 94110 (US)
(72) Inventor: JOSHI, Akanksha, Jersey City, NJ New Jersey 07302 (US); LYSAKOWSKI, Lukasz, Berkeley, CA California 94702 (US); BRUENING, Oscar, San Francisco, CA California 94110 (US); DAM, Anthony, Seattle, WA Washington 98117 (US); VENKATACHALAM, Sugandhan, San Francisco, CA California 94117 (US)
(74) Representative: Gill Jennings & Every LLP

(57) **Abstract**

Devices, systems, methods, and computer-readable media for providing to a user a user-input portal having information about a tour that is available during a particular time period. The tour has a user-configurable time, date, duration, and number of participant spots. One method includes providing a configuration engine wherein the user can configure the engine to automatically modify a point of sale (POS) system. A method further includes updating selectable buttons configured in the user-input portal based on the number of occupied participant spots for the tour and the number of unoccupied participant spots for the tour. A method further includes adjusting a price of the tour based on the number of occupied participant spots and the number of unoccupied participant spots.

## Description

### Field of the Present Disclosure

Devices, systems, methods, and computer-readable media for providing to a user a user-input portal having information about a tour that is available during a particular time period. In particular, the present application describes concepts involving configurable user-input portals for tour operators.

### Background

People enjoy participating in a variety of activities. These activities could be local activities or activities that require travel. These activities could also be a variety of different kinds of activities, which includes tours. The tours may include, but are not limited to, sightseeing tours, food tours, vehicle tours or rentals, such as by boat, car, bus, bicycle, Segway, scooter, etc., and other activities organized by an organizing entity wherein a participant will need to sign up to participate or sign up to reserve equipment with that organizing entity. People have used different avenues to search for and reserve spots for tours.

As the Internet has grown, it has made many aspects of people's lives easier and more convenient. Booking tours is one of those aspects. Websites have been created for the purpose of helping people search for and book tours. Some of these websites can be referred to as activity booking sites. Activity booking sites allow people to search for and book different activities.

Activity booking sites add convenience for customers. One way activity booking sites add convenience to customers is that it allows customers to more easily find tours. This is accomplished by allowing customers to search for the type of tour they want. Activity booking sites allow customers to search for a type of tour, location of a tour, price of a tour, duration of a tour, etc. Some activity booking sites also allow people to write customer reviews and read reviews from other customers. In this regard, many activity booking sites provide customers with a convenient website to conduct the various aspect of planning and booking activities.

These activity booking sites also provide convenience for the tour operators. Putting their tours on these activity booking sites allows more potential customers see their tours than if the tour operator only had the tour viewable on its own private website and promotional materials. As a result of having more people view the tour listing, activity booking sites allow the tour operator to inform more people about the tours available and what occurs during each type of tour. This may attract customers to a specific tour that were not originally looking for that specific tour.

Customer reviews may also help the tour operator. A product or service with positive customer reviews may attract more customers because customers may believe they will have a positive experience with that product or service which would be similar to other customers' experiences.

However, these sites can often be inaccurate with regard to the tour offerings, availability of spaces in the tour, or equipment to be rented. For example, a tour may no longer be offered, a space in the tour may not be available, or equipment may not be available for rent but the site does not indicate that to the user of the site. Additionally, the site may offer a tour on the site that is not economically advantageous to the tour operator due, for example, to the number of spaces filled for the tour.

### Brief Description of the Drawings

Figure 1 illustrates a functional block diagram of a computing system including at least one memory array featuring instructions for a configurable user-input portal for tour operators.
Figure 2 is a screenshot of user-configurable rules for automatically updating the price of a tour displayed on the activities booking site.
Figure 3 is a screenshot of a tour listing featuring the start time for a tour displayed on the activities booking site.
Figure 4 illustrates a flow diagram of an example method for a configurable user-input portal for tour operators.
Figure 5 is a screenshot showing rental equipment displayed on the activities booking site.

### Detailed Description

The embodiments of the present disclosure describe an activity booking site. As used herein, a "tour" or "activity" are used interchangeably to describe any activity wherein a participant will need to sign up to participate or sign up to reserve equipment. Examples include: boat tours, multiple water sports, sailing classes, boat rentals, bike tours, cannabis tours, coach tours, food and/or drink tours, ghost tours, photo tours, Segway tours, walking and/or running tours, farm tours, helicopter tours, plane tours, horseback riding tours, hot air balloon tours, and other activities organized by an entity such as flyboarding, jetpacking, hang gliding, paragliding, kayaking, standup paddle boarding, surfing, kiteboarding, outdoor activities, rafting, scuba diving, snorkeling, waterskiing, wakeboarding, ferries, ziplining, skydiving, track experiences, boat charters, fishing charters, escape rooms, rage rooms, axe throwing, visiting a cat cafe, paintballing, art classes, cooking classes, tasting classes, dance classes, fitness classes, flying lessons, life skills classes, skiing, snowboarding, visiting a brewery, visiting a winery, visiting a distillery, visiting a casino, visiting a golf course, visiting a gun range, playing laser tag, playing mini-golf, using a transportation service, visiting a trampoline park, going to a theater, using a limo service, participating in an animal encounter, visiting a karting center, visiting a museum, visiting a historic site, etc.

More specifically, the embodiments describe a tour booking site that allows tour operators to set different conditions for automatically updating their tour listing. As used herein, a "tour" can be any activity organized by an organizing entity wherein a participant will need to sign up to participate or sign up to reserve equipment with that organizing entity. These conditions allow for automatic updates for aspects of the listings such as, but not limited to, price or equipment availability. This adds convenience for tour operators because this allows the tour listings to update after certain conditions are met without the tour operator having to actively monitor the site consistently. This may allow tour operators to accomplish other important tasks instead of using that time to monitor the tour listing.

Accordingly, devices, systems, methods, and computer-readable media are discussed herein for providing to a user a user-input portal having information about a tour that is available during a particular time period. The tour has a user-configurable time, date, duration, and number of participant spots, and the user can select the tour based on a time, date, duration, and number of participant spots.

One method includes providing a configuration engine wherein the user can configure the engine to automatically modify a point of sale (POS) system. Modifying the POS system includes tracking a number of occupied participant spots for the tour and a number of unoccupied participant spots for the tour.

Such a method further includes updating selectable buttons configured in the user-input portal based on the number of occupied participant spots for the tour and the number of unoccupied participant spots for the tour. Additionally, a method can include adjusting a price of the tour based on the number of occupied participant spots and the number of unoccupied participant spots.

In some embodiments, the tour booking site may feature a POS system that updates tour listings automatically. The tour listings may feature a variety of information about the tour listings. This information may include one or more of the following, but is not limited to, the activities that will occur on the tour, the price of the tour, tour reviews, location, duration of the tour, and pictures of the tour. Information about what activities will occur on the tour may, for example, include the method of travel during the tour. These methods of travel may, for instance, include walking, kayaking, biking, etc.

The tour booking site may update the price of a tour listing based on a number of available spots for a tour. While examples in the present disclosure adjust the price of a tour listing based on a number of available spots, embodiments are not so limited and may include adjusting the price of a tour based on other aspects.

As discussed above, the activity booking site may allow a tour operator to set conditions for updating tour listings automatically. As used herein, a tour listing may refer to a tour displayed to a customer via a customer's computing device.

The tour booking site may feature a configurable engine that allows a tour operator to set conditions for automatically updating a tour listing. One condition a tour operator may set to automatically update a tour listing is reaching a time of day. For example, a tour operator may set a condition that, when the start time of a tour listing is reached or a threshold time prior to the start of the tour, the tour listing will change to the next available time of the listed tour. These and other concepts will be discussed in more detail below with reference to the accompanying drawings.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

As used herein, "a number of' something may refer to one or more such things. For example, a number of tour vehicle options may refer to at least one tour vehicle option.

The figures herein follow a numbering convention in which the first digit or digits correspond to the figure number of the drawing and the remaining digits identify an element or component in the drawing. Similar elements or components between different figures may be identified by the use of similar digits.

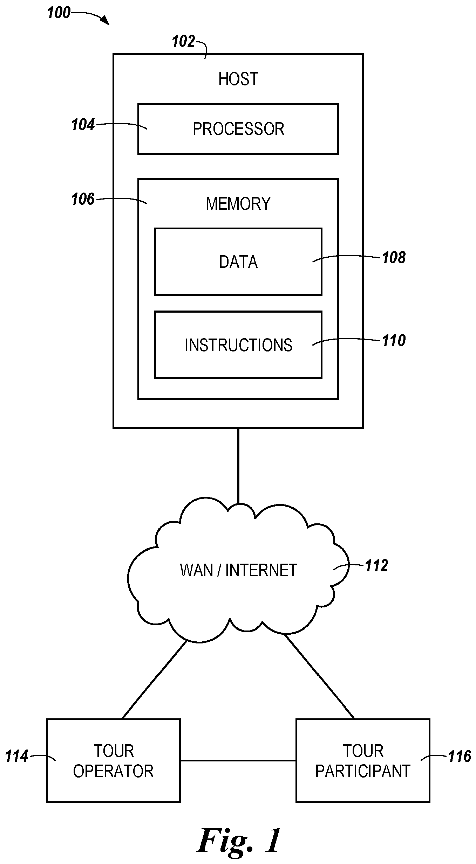

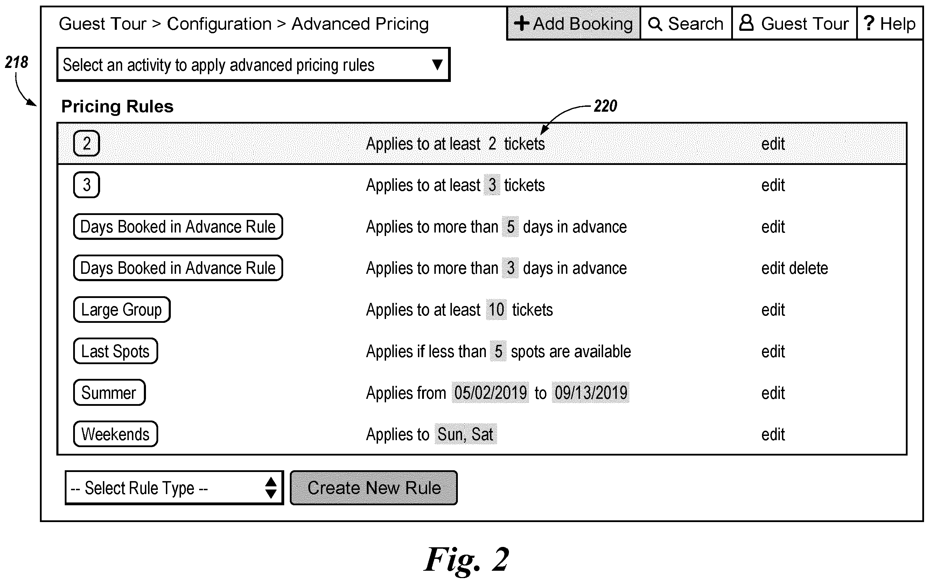

For example, reference numeral 104 may reference element "04" in Figure 1, and a similar element may be referenced as 204 in Figure 2. Multiple analogous elements within one figure may be referenced with a reference numeral followed by a hyphen and another numeral or a letter. For example, 102-1 may reference element 02-1 in Figure 1 and 102-2 may reference element 02-2, which may be analogous to element 102-1. Such analogous elements may be generally referenced without the hyphen and extra numeral or letter. For example, elements 102-1 and 102-2 or other analogous elements may be generally referenced as 102.

Figure 1 illustrates a functional block diagram of a computing system including at least one memory array featuring instructions for a configurable user-input portal for tour operators in accordance with a number of embodiments of the present disclosure. Apparatus 100 includes a host 102 which features a processor 104 and memory 106. The memory includes information stored therein in the form of data 108 and/or instructions 110. Apparatus 100 also includes a connection to a wide area network (WAN) (e.g., the Internet 112), an access portal to allow access by a tour operator via device 114, and an access portal to allow access by a tour participant via device 116.

In some embodiments, a host may include a processor. As used herein, "a processor" may be a number of processors, such as a parallel processing system, a number of coprocessors, etc. Example hosts may include, or be implemented in, server computing devices, desktop computers, laptop computers, personal computers, mobile telephones, PDAs, and the like. Such a host 102 may be associated with a configurable software engine for automatically updating portions of a website (also referred to herein as a site).

The processor 104 may execute instructions stored in a memory (e.g., memory 106) for automatically updating a website. In some embodiments, the website is an activity booking site. In some embodiments, the activity booking site is a tour booking site or activity equipment booking site. The booking site may provide a user-input portal with a variety of tour or equipment listings. In some embodiments, the booking site may also have a configuration engine. The configuration engine may be used to modify a point of sale (POS) system. Customers may purchase spots for activities using the POS system, or customers may purchase the spots for activities by contacting the activity provider directly.

As used herein, a POS system may refer a system that that serves as the interface where a customer may make purchases. In serving as that interface, a POS system may include a variety of features for the convenience of the customer and operator of the POS system. For example, in some embodiments, the POS system may include tour listings in which portions of the tour listings can be automatically modified by a configuration engine.

In some embodiments, the configuration engine may update portions of the tour listing by tracking a number of occupied and unoccupied participant spots for a tour listing. In some embodiments, the configuration engine may be modified to automatically update a selectable button. As used herein, the term button may refer to an area of a screen of a computing device wherein a user can click that area and cause an action to occur within the computing device. In some embodiments, a click may be performed using a user input device such as a mouse. In other embodiments, a click may be performed by touching the screen of the computing device. A button may display a variety of details about a tour, including but not limited to, a price of the tour, a start time for the tour, and the number of unoccupied participant spots for the tour.

The configuration engine may automatically update a price for a tour. In some embodiments, the configuration engine may be configured to dynamically update the price of a tour based on the number of occupied or unoccupied participant spots for the tour. For example, in some embodiments, a tour operator can configure the configuration engine to adjust the price of a tour if the number of occupied participants spots is greater than or less than a threshold of unoccupied participants spots without any further input by the tour operator.

In such an embodiment, the tour operator sets the threshold and, once reached, the site automatically changes the price of the tour. In this manner, the price dynamically changes without the tour operator having to monitor when the threshold is reached and then change the price of the tour.

A tour operator may also configure the configuration engine to raise the price of a tour if the number of unoccupied spots is below the threshold in some embodiments. Such an embodiment can be beneficial where the tour is filling and the tour operator would like to keep the size of the tour at a manageable size, but would take more people if they pay more.

Similarly, a tour operator may also configure the configuration engine to lower the price of the tour if the number of occupied spots is below the threshold. This may be beneficial where the tour operator would like to fill enough spots to make the tour viable. For example, where the tour is a bus tour, the tour operator may set a minimum threshold of passengers at which point the tour is viable (e.g., profitable or otherwise worth doing) and once that threshold is reached, the tour operator will not cancel or reschedule the tour.

A tour operator may also use the engine to configure the pricing system to raise the price of the tour if the number of unoccupied spots is above the threshold. A tour operator may want to do this if the tour date is coming and the tour operator needs more revenue to make the tour profitable. If multiple tours are offered and some tours are nearly full and others are nearly empty, it may be a mechanism to discourage people from signing up for the nearly empty tours so those tours can be canceled or rescheduled. The configuration engine can also lower the price of the tour if the number of occupied spots is above the threshold. This may be beneficial where the tour operator would like to fill all remaining spots. For example, where the tour is a bus tour, the tour operator may set a minimum threshold of passengers at which point the tour is viable (e.g., profitable or otherwise worth doing) and once that threshold is reached, it is preferable to have a full bus than a partially full bus as the additional operational costs are very small compared to the profit generated by the additional passengers even at a lower tour price.

The configuration engine may be constructed to give the tour operator the freedom to decide what conditions will activate which price adjustments. One or more such items can be provided to the tour operator as selections that can be made by the tour operator via their computing device.

In some embodiments, the configuration engine may automatically update a price of a tour based on an amount of time before the start time of the tour. In some embodiments, a tour operator may utilize the configuration engine to automatically adjust the price of a tour based on an amount of time before the start time of a tour being within a threshold of time before the start of the tour.

For example, the tour operator may configure the configuration engine to decrease the price of the tour within three hours of the start time of the tour. This configuration may be beneficial when a tour operator is interested in filling the tour before the start time.

In another example, the tour operator may configure the engine to increase the price of the tour within three hours of the start time of the tour. This may be beneficial where the tour operator may not want more participants but will take them if they pay the higher price.

Figure 2 is a screenshot of user-configurable rules for automatically updating the price of a tour displayed on the activities booking site. For example, in some embodiments, the engine may automatically adjust the price of a tour based on an amount of days before the start of the tour. For example, as shown in Fig. 2, the engine may automatically adjust the price of a tour based on a variety of categories 218, such as the amount of days before the start of the tour being above a threshold of days before the start of the tour. The conditions 220 for the automatic price changes may be adjusted by the user.

Further, in some embodiments, to encourage customers to purchase the tour early, the tour operator may utilize the engine to decrease the price of a tour if the amount of days before the start of the tour is more than a threshold number of days. In some embodiments, the tour operator may utilize the engine to decrease the price of the tour, if the amount of days before the tour is less than a threshold number of days. This may help fill a tour in time for the tour to begin or before a cut-off date for the tour provider to decide whether to offer the tour.

In some embodiments, the tour operator may increase the price of a tour, if the amount of days before a tour is more than or less than a threshold number of days. In this manner, the tour operator may discourage filling a tour that the operator does not want to do or can gain more money for last minute tour goers.

The engine may include instructions to allow a tour operator to automatically adjust the price of a tour based on a day of the week. In some embodiments, for example, the tour operator may configure the engine to automatically increase the price of a tour on a Saturday or Sunday. This may be beneficial so that the tour operator does not need to manually set such price changes for all tours occurring on weekends.

In some embodiments, the tour operator may decrease the price of the tour on a weekday, e.g., Tuesday. The tour operator may utilize the engine to automatically increase or decrease the price of the tour on any number of days of the week.

In some embodiments, the engine may automatically change a listing of a tour to a subsequent tour once a time threshold with respect to the start time of the tour has been reached. The time threshold can be configurable by the tour operator.

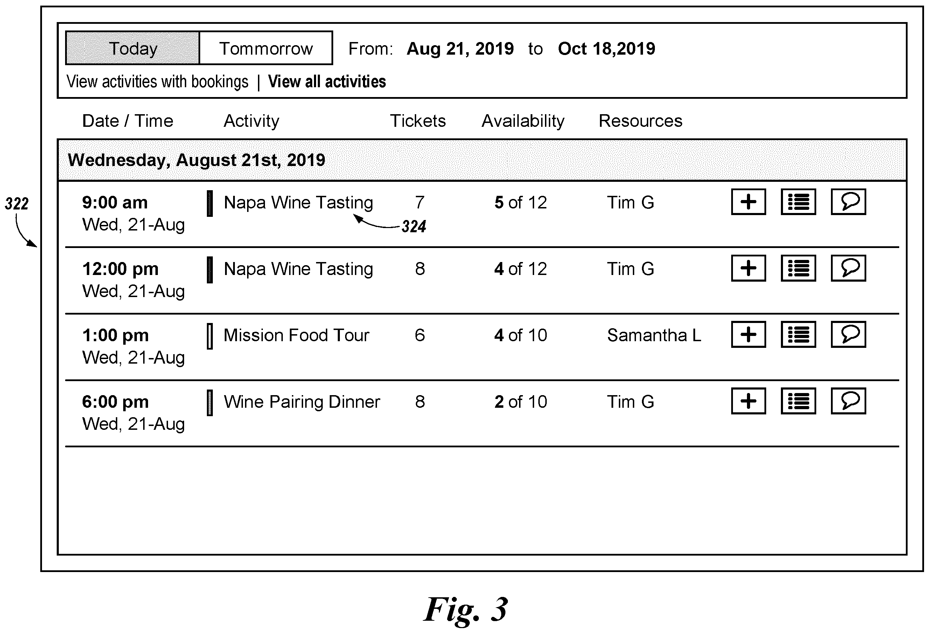

Figure 3 is a screenshot of a tour listing featuring the start time for a tour displayed on the activities booking site. The start time and date 322 of a tour 324 may be displayed on the tour booking site. In some embodiments, once that start time for a tour is reached, the engine may change the displayed tour listing to the next available tour listing for that tour. Such implementations can allow for the tour site to be automatically updated, which can make for a better user experience and make to tour site seem more professional which may instill confidence in a prospective tour participant.

In various embodiments, the engine can be configured by the tour operator to automatically adjust the price of a tour based on an amount tour purchases in a single transaction. In some embodiments, a tour operator may configure the engine to automatically lower the price of a tour if an amount of tour purchases in a single transaction is above a threshold number of tour purchases in a single transaction (e.g., a discount if two or more people sign up together, wherein the tour operator sets the threshold at two participants. This may allow tour operators to give discounts to customers purchasing the tour for a group of people.

In some embodiments, the tour operator may utilize the engine to recognize multiple thresholds corresponding to multiple discounts. For example, a tour operator may utilize the engine to decrease the price of a tour once a specified number of tour purchases in a single transaction is reached, and also give an even greater discount once a higher specified number of tour purchases in a single transaction is reached. This may allow a tour operator to encourage customers to buy larger numbers of participant spots for a tour.

The engine can be configured by the tour operator to automatically adjust a price of the tour based on a range of days. In some embodiments, a tour operator may utilize the engine to automatically adjust the price of the tour based on specified days. For example, the price of a tour may be automatically adjusted on holidays. The magnitude and direction of adjustment may vary depending on the holiday. In some embodiments, the price of a tour may be adjusted based on seasons. For example, the price of a tour may increase in the summer but decrease in the winter. The engine can be configured by the tour operator to adjust the price of the tour based on a number of days at any time of the year.

The engine can be configured by the tour operator to automatically adjust the price of the tour based on a time of day. In some embodiments, the tour operator may utilize the engine to increase or decrease the price of a tour depending on the time of day. For example, a tour operator may decrease the price of a tour during certain hours of the morning. In another example, a tour operator may utilize the engine to increase the price of a tour at certain times in the afternoon.

The engine can be configured by the tour operator to automatically adjust the price of a tour based on an identity of a third party authorized to sell participation spots to the tour. In some embodiments, a third-party seller may sell participation spots to tours listed on the tour booking site. For example, the tour operator may utilize the engine to decrease the price of a tour for specific third-party sellers.

The tour operator may also utilize the engine to automatically update the tour listing based on the activities of a third party. For example, the tour operator may configure the engine to update the number of occupied and unoccupied participation spots when a third-party seller sells participation spots for the tour.

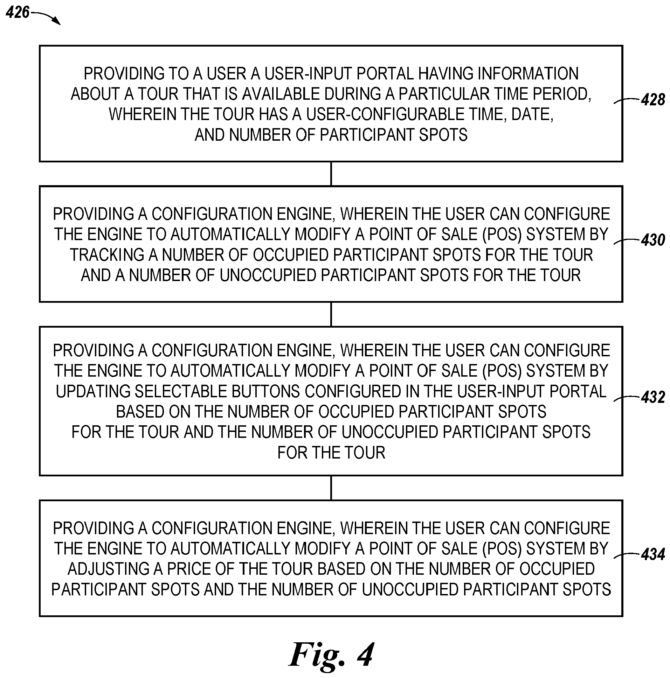

Figure 4 illustrates a flow diagram of an example method for a configurable user-input portal for tour operators in accordance with a number of embodiments of the present disclosure. Unless explicitly stated, elements of methods described herein are not constrained to a particular order or sequence. Additionally, a number of the method embodiments, or elements thereof, described herein may be performed at the same, or at substantially the same, point in time.

At block 428, method 426 includes providing to a user a user-input portal having information about a tour that is available during a particular time period. In some embodiments, the tour has a user-configurable time, date, duration, and number of participant spots. The user can select the tour based on a time, date, duration, and a number of participant spots. In some embodiments, the configuration engine includes one or more user-configurable conditions for the price of the tour to update automatically based on a source of a tour purchase. For example, one condition may be that a price of the tour decreases for customers who purchase a participant spot for the tour from a specific third-party seller.

The engine can also be configured by the tour operator to allow a tour listing to automatically adjust based on reservations from a third-party seller. In some embodiments, the number of occupied and unoccupied participant spots may adjust automatically based on the participant spots sold by a third-party seller. For example, if a customer buys three participant spots from a third-party seller, the tour listing on the tour booking site may automatically update to show that there are three more occupied participant spots and three less unoccupied participant spots.

At block 430, method 426 includes providing a configuration engine, wherein the user can configure the engine to automatically modify a POS system by tracking a number of occupied participant spots for the tour and a number of unoccupied participant spots for the tour. By tracking the number of participant spots, the engine may allow a tour operator to modify the POS system in various ways. For example, the price of a tour listing in the POS may be adjusted based on the number of the occupied or unoccupied participant spots.

In some embodiments, the engine may allow the tour listing to automatically update a number of participant spots based on the personnel that is scheduled to operate the tour. For example, a tour operator may decide that certain personnel may be able to manage larger groups of participants than other personnel. The engine can be configured by the tour operator to allow the tour operator to configure the POS to adjust the amount of total participant spots based on the personnel scheduled to operate the tour. In some embodiments, the tour operator may utilize the engine to adjust the amount of participant spots based on the number of personnel scheduled to operate the tour.

In some embodiments, the tour operator may utilize the engine to update the personnel scheduled to operate a tour based on a time of day. For example, different personnel may be scheduled operate tours that start at different times. The engine can be configured by the tour operator to automatically change the scheduled personnel to the intended personnel for the correct tour at the correct time.

At block 432, method 426 includes providing a configuration engine, wherein the user can utilize the engine to automatically modify a POS system by updating selectable buttons configured in the user-input portal based on the number of occupied participant spots for the tour and the number of unoccupied participant spots for the tour. In some embodiments, a button may show that there are no unoccupied participant spots for a tour. When every participant spot for a tour is occupied, a button may not allow a customer to purchase a participant spot for the tour. In some embodiments, the tour operator may have the ability to allow a customer to purchase a participant spot for a tour when the POS shows that there are no participant spots available for the tour.

At block 434, method 426 includes providing a configuration engine, wherein the user can utilize the engine to automatically modify a POS system by adjusting a price of the tour based on the number of occupied participant spots and the number of unoccupied participants spots. A tour operator may configure the engine to increase or decrease the price of participant spots for a tour based on the number of occupied or unoccupied participant spots reaching a certain threshold.

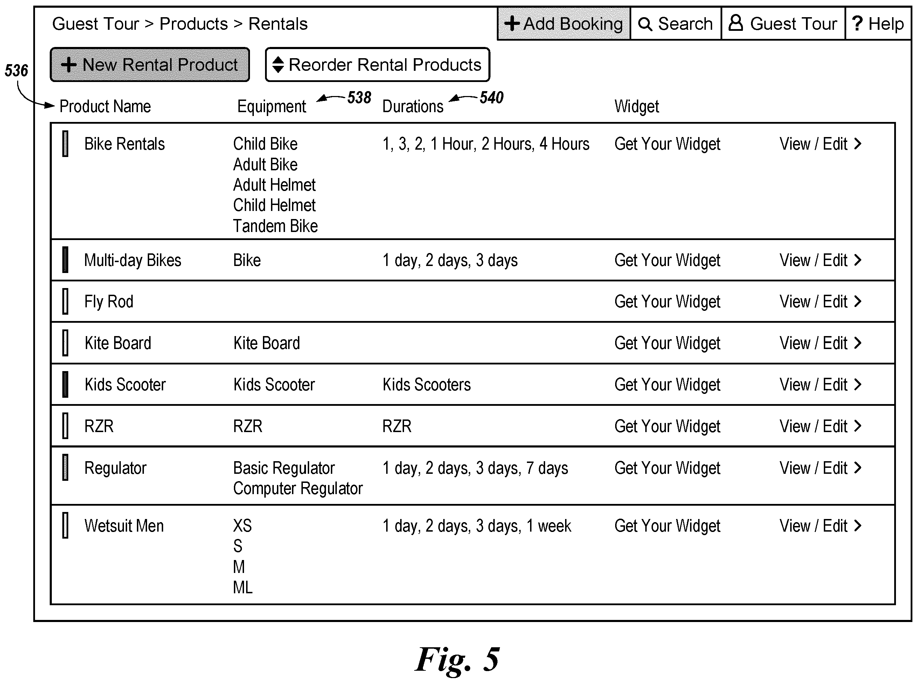

Figure 5 is a screenshot showing rental equipment displayed on the activities booking site. In some embodiments, the engine can be configured by the tour operator to configure a tour listing to include one or more user-configurable conditions for an availability of tour equipment to be updated automatically. As used herein, the term tour equipment refers to equipment used by tour personnel to facilitate the tour. For example, tour equipment may include, but is not limited to, boats, helicopters, cars, motorcycles, items at a campsite, etc. As shown in Fig. 5, the product name 536 shows the type of rental that is listed. For example, product name 536 may include, but is not limited to bike rentals, multi-day bikes, fly rods, kite board, kid's scooters, and RZR scooters. Fig. 5 also shows the equipment 538 that may be included in each type of rental, such as various bikes, helmets, scooters, etc. Further, Fig. 5 shows the options for the duration 540 of each rental.

In some embodiments, the engine can be configured by the tour operator to configure a tour listing to include one or more user-configurable conditions for the availability of rental equipment to update automatically. As used herein, the term rental equipment may refer to equipment a customer rents to use while participating in the tour and will return when the tour ends.

Rental equipment may include, but is not limited to bicycles, helmets, scooters, skis and ski equipment, snowboards and snowboard equipment, jet skis, kayaks, canoes, surfboards, sports equipment, inflatables, all-terrain vehicles (ATVs), go karts, various outdoor activity equipment, umbrellas, fishing equipment, goggles, pontoon boats, paddleboards, etc. The availability of the rental equipment may be displayed on the tour booking site. The engine may be configured to automatically update a tour listing when rental equipment is rented and returned.

In some embodiments, the engine can be configured by the tour operator to configure the tour listing to include user-configurable conditions for the price of rental equipment to update automatically. As stated above, rental equipment is equipment a customer rents to use while participating in the tour and will return when the tour ends.

In some embodiments, there may be a cost associated with renting the rental equipment. The cost of the rental equipment may be displayed in the tour listing. The engine may be configured to automatically update the price of the rental equipment due to a variety of conditions. These conditions may include but are not limited to the availability of the rental equipment, the time of day, the day of the week, etc.

In the above detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

It is to be understood that the terminology used herein is for the purpose of describing particular embodiments only and is not intended to be limiting. As used herein, the singular forms "a", "an", and "the" include singular and plural referents, unless the context clearly dictates otherwise, as do "a number of', "at least one", and "one or more" (e.g., a number of occupied participant spots may refer to one or more occupied participant spots), whereas a "plurality of' is intended to refer to more than one of such things.

Furthermore, the words "can" and "may" are used throughout this application in a permissive sense (i.e., having the potential to, being able to), not in a mandatory sense (i.e., must). The term "include," and derivations thereof, means "including, but not limited to".

Although specific embodiments have been illustrated and described herein, those of ordinary skill in the art will appreciate that an arrangement calculated to achieve the same results may be substituted for the specific embodiments shown. This disclosure is intended to cover adaptations or variations of one or more embodiments of the present disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the one or more embodiments of the present disclosure includes other applications in which the above structures and processes are used. Therefore, the scope of one or more embodiments of the present disclosure should be determined with reference to the appended claims, along with the full range of equivalents to which such claims are entitled.

In the foregoing Detailed Description, some features are grouped together in a single embodiment for the purpose of streamlining the disclosure. This method of disclosure is not to be interpreted as reflecting an intention that the disclosed embodiments of the present disclosure have to use more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. An apparatus (100), comprising:
a computing device having a processor (104) and a memory (106), wherein the computing device executes instructions (110) stored in the memory (106) to:
provide to a user a user-input portal having information about a tour (324) that is available during a particular time period, wherein the tour (324) has a user-configurable time, date, duration, and number of participant spots, and wherein the user can select the tour (324) based on a time, date, duration, and number of participants (116);
provide a configuration engine, wherein the user can configure the configuration engine to automatically modify a point of sale (POS) system by:
tracking a number of occupied participant spots for the tour (324) and a number of unoccupied participant spots for the tour (324);
updating selectable buttons configured in the user-input portal based on the number of occupied participant spots for the tour (324) and the number of unoccupied participant spots for the tour (324); and
adjusting a price of the tour (324) based on the number of occupied participant spots for the tour (324) and the number of unoccupied participant spots for the tour (324).

2. The apparatus of claim 1, wherein a tour listing configured via the configuration engine includes one or more user-configurable conditions (220) for the price of the tour (324) to update automatically based on a source of a tour purchase.

3. The apparatus of claim 1, wherein a tour listing configured via the configuration engine includes one or more user-configurable conditions (220) for a tour listing to change to a subsequent tour (324) automatically when a start time of the tour (324) is reached.

4. The apparatus of claim 1, wherein a tour listing configured via the configuration engine includes one or more user-configurable conditions (220) for a number of total participant spots to update automatically based on personnel scheduled to operate the tour (324).

5. The apparatus of claim 1, wherein a tour listing configured via the configuration engine includes one or more user-configurable conditions (220) for scheduled tour personnel to update automatically at a specific time.

6. The apparatus of claim 1, wherein a tour listing configured via the configuration engine includes one or more user-configurable conditions (220) for an availability of the tour (324) to update based on reservations from third parties.

7. The apparatus of claim 1, wherein a tour listing configured via the configuration engine includes one or more user-configurable conditions (220) for an availability of tour equipment (538) to be updated automatically.

8. The apparatus of claim 7, wherein the tour equipment (538) includes boats used during the tour (324).

9. The apparatus of claim 1, wherein a tour listing configured via the configuration engine includes one or more user-configurable conditions (220) for an availability of rental equipment (538) to update automatically.

10. The apparatus of claim 9, wherein the rental equipment (538) includes rental bikes and rental helmets.

11. The apparatus of claim 1, wherein a tour listing configured via the configuration engine includes one or more user-configurable conditions (220) for a price of rental equipment (538) to update automatically.

12. The apparatus of claim 1, wherein the price of the tour (324) is adjusted based on the number of occupied participant spots being greater than a threshold of occupied participant spots.

13. The apparatus of claim 1, wherein the price of the tour (324) is adjusted based on the number of unoccupied participant spots being greater than a threshold of unoccupied participant spots.

14. The apparatus of claim 1, wherein the price of the tour (324) is adjusted based on an amount of days before a start of the tour (324) being above a threshold of days before the start of the tour (324).

15. The apparatus of claim 1, further comprising changing a listing of the tour (324) to a subsequent tour (324) once a time threshold with respect to a start time of the tour (324) has been reached.
